# EUROPÄISCHE PATENTSCHRIFT

(11) **EP 3 482 478 B1**
(45) Veröffentlichungstag und Bekanntmachung des Hinweises auf die Patenterteilung: **22.10.2025**
(21) Anmeldenummer: 17722788.1
(22) Anmeldetag: 11.05.2017
(51) Int. Cl.: H02K 3/12, H02K 15/35, B23K 26/24, B23K 26/26, B23K 26/082, B23K 26/08, B23K 101/38

(54) **STATOR EINER ELEKTRISCHEN MASCHINE**
STATOR OF AN ELECTRICAL MACHINE
STATOR D'UNE MACHINE ÉLECTRIQUE

(30) Priorität: 08.07.2016 DE 102016212510; 17.01.2017 DE 102017200688
(43) Veröffentlichungstag der Anmeldung: 15.05.2019
(73) Patentinhaber: Robert Bosch GmbH, 70442 Stuttgart (DE)
(72) Erfinder: OSSENKOPP, Stefan, 31177 Harsum (DE); HEIN, Tobias, 31139 Hildesheim (DE); LANGE, Fabian, 30175 Hannover (DE); PRIEBE, Patrick, 30457 Hannover (DE)
(86) Internationale Anmeldenummer: PCT/EP2017/061286
(87) Internationale Veröffentlichungsnummer: WO 2018/007060

(56) Entgegenhaltungen:
- EP-B1- 1 364 440
- DE-T2- 60 001 526
- US-A1- 2014 048 518
- US-A1- 2016 118 869

## Beschreibung

### Stand der Technik

Die Erfindung geht aus von einem Stator einer elektrischen Maschine nach der Gattung des Hauptanspruchs.

Es ist schon ein Stator einer elektrischen Maschine aus der EP 1 364 440 B1 bekannt, der Statornuten und in den Statornuten angeordnete Leiterelemente aufweist, die jeweils zwei Leiterenden haben. Mehrere nebeneinander liegende Leiterenden verschiedener Leiterelemente sind jeweils mittels einer an den Stirnseiten der betreffenden Leiterenden vorgesehenen Schweißverbindung ohne Zusatzwerkstoff miteinander verbunden. Die miteinander verbundenen Leiterenden bilden jeweils einen gemeinsamen viereckigen Leiterquerschnitt, der eine Höhe H und eine Breite B aufweist, wobei die Höhe H der Höhe h eines Einzelquerschnitts der Leiterenden entspricht und sich die Breite B des gemeinsamen Leiterquerschnitts aus der Summe der Breiten b der Einzelquerschnitte der Leiterenden ergibt. Die Schweißverbindung ist jeweils in Richtung der Breite B gesehen zwischen zwei nicht aufgeschmolzenen Randabschnitten der äußersten Leiterenden vorgesehen. Der Schweißquerschnitt in Richtung der Höhe H ist vergleichsweise gering, was Auswirkungen auf die mechanische Dauerfestigkeit der Schweißverbindung hat und im Betrieb der elektrischen Maschine Temperaturspitzen an der Schweißverbindung infolge einer hohen Stromdichte bewirken kann. Weiterer relevanter Stand der Technik ist in US 2014/048518 A1, US 2016/118869 A1, DE 600 01 526 T2 offenbart.

### Vorteile der Erfindung

Der erfindungsgemäße Stator einer elektrischen Maschine mit den kennzeichnenden Merkmalen des Hauptanspruchs hat demgegenüber den Vorteil, dass die mechanische Festigkeit der Schweißverbindung erhöht und die Temperaturspitzen an der Schweißverbindung zumindest verringert werden, indem die Erstreckung der Schweißverbindung in Richtung der Höhe H zumindest abschnittsweise größer ist als die Höhe H des gemeinsamen Leiterquerschnitts. Die Schweißverbindung steht dadurch in Richtung der Höhe H gesehen gegenüber den Randabschnitten der äußersten Leiterenden vor. Das beidseitige Vorstehen bzw. Auskragen der Schweißverbindung benötigt Material, das aus dem aufgeschmolzenen Schweißbad kommt und die Oberfläche der Schweißverbindung in Bezug auf die Stirnseiten der Randabschnitte einsinken lässt. Die eingesunkene Schweißverbindung hat den Vorteil, dass sie den Wickelkopf in axialer Richtung des Stators gesehen nicht erhöht, so dass entsprechend Bauraum eingespart wird.

Durch die in den Unteransprüchen aufgeführten Maßnahmen sind vorteilhafte Weiterbildungen und Verbesserungen des im Hauptanspruch angegebenen Stators möglich.

Gemäß einer vorteilhaften Ausführung ist die Schweißverbindung bei einer Draufsicht auf die Stirnseiten der betreffenden Leiterenden ovalförmig oder kreisförmig ausgebildet. Weiterhin hat die Schweißverbindung in Richtung der Längserstreckung der Schweißverbindung gesehen einen ovalförmigen Querschnitt.

Besonders vorteilhaft ist, wenn das Verhältnis der Breite B zur Höhe H des gemeinsamen Leiterquerschnitts größer als zwei ist, da auf diese Weise das Einsinken des aufgeschmolzenen Schweißbades erleichtert wird und somit eine Erhöhung des Wickelkopfes in axialer Richtung verhindert wird.

Weiterhin vorteilhaft ist, wenn der Querschnitt der Leiterenden jeweils eine Höhe h und eine Breite b aufweist, wobei das Verhältnis von der Breite b zur Höhe h des Querschnitts der Leiterenden jeweils größer gleich eins ist. Auf diese Weise wird auch für zwei zu verbindende Leiterenden ein günstiges Seitenverhältnis geschaffen, das ein Einsinken des aufgeschmolzenen Schweißbades erleichtert. Bei der Verwendung des Verhältnisses von der Breite b zur Höhe h des Querschnitts der Leiterenden jeweils größer gleich 1,4 können Flachdrähte verwendet werden, die geringe Anforderungen an den Lackierprozess des Lackdrahtes stellen.

Sehr vorteilhaft ist es, wenn der Querschnitt der Leiterenden jeweils quadratisch oder rechteckförmig, insbesondere mit abgerundeten Kanten, ausgebildet ist, da auf diese Weise ein hoher elektrischer Füllfaktor für die elektrische Maschine ermöglicht wird.

### Zeichnung

Ein Ausführungsbeispiel der Erfindung ist in der Zeichnung vereinfacht dargestellt und in der nachfolgenden Beschreibung näher erläutert.
- Fig.1: zeigt eine dreidimensionale Ansicht eines Stators einer elektrischen Maschine, bei der die Erfindung angewendet werden kann,
- Fig.2: eine Seitenansicht einer erfindungsgemäßen Schweißverbindung zwischen zwei Leiterenden zweier Leiterelemente und
- Fig.3: eine Draufsicht auf die Schweißverbindung nach Fig.2.

### Beschreibung des Ausführungsbeispiels

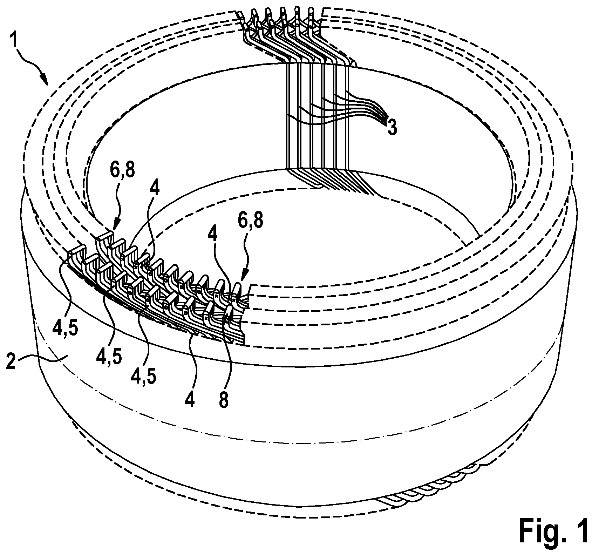

Fig.1 zeigt eine dreidimensionale Ansicht eines Stators einer elektrischen Maschine, bei der die Erfindung angewendet werden kann.

Der Stator 1 der elektrischen Maschine weist ein Statorblechpaket 2 mit Statornuten 3 auf. In den Statornuten 3 sind Leiterelemente 4 einer elektrischen Wicklung vorgesehen, die jeweils zwei Leiterenden 5 haben. Um eine elektrische Wicklung, beispielsweise eine Mehrphasenwicklung, zu bilden, müssen die Leiterenden 5 der Vielzahl von Leiterelementen 4 gemäß einem sogenannten Wickelschema stoffschlüssig miteinander verbunden werden. Dazu werden jeweils zwei oder mehr nebeneinander liegende Leiterenden 5 verschiedener Leiterelemente 4 mittels einer Schweißverbindung bzw. einer Schweißnaht 8 miteinander verbunden. Diese Schweißverbindung 8 ist an den Stirnseiten 6 der betreffenden Leiterenden 5 vorgesehen und wird mittels eines Lasers und ohne Verwendung eines Zusatzwerkstoffes hergestellt. Die Schweißverbindungen 8 können nach dem Schweißen jeweils von einer nicht dargestellten Isolation umschlossen werden, um Funkenüberschläge zwischen Leiterenden 5 verschiedener elektrischer Phasen zu vermeiden.

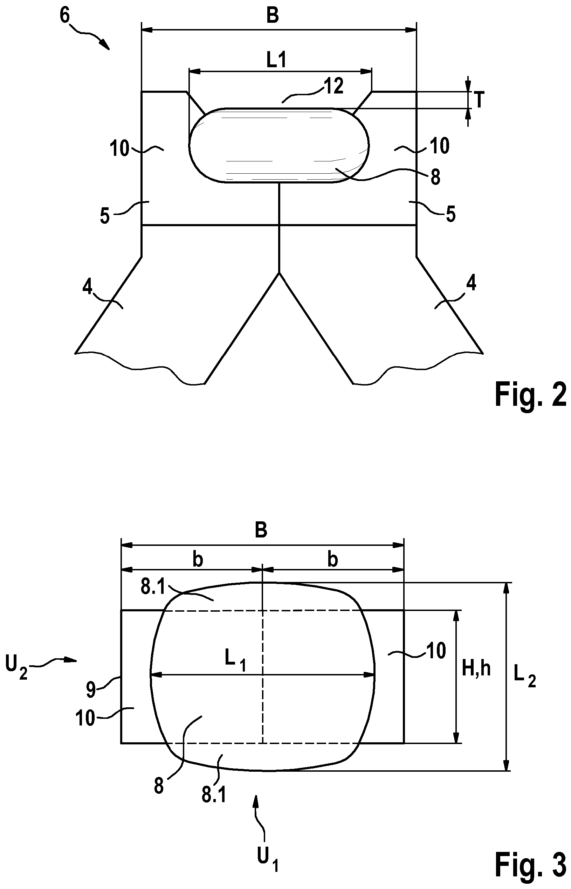

Fig.2 zeigt eine Seitenansicht einer erfindungsgemäßen Schweißverbindung zwischen zwei Leiterenden zweier Leiterelemente. Bei der Ansicht nach Fig.2 sind die gegenüber der Ansicht nach Fig.1 gleichbleibenden oder gleichwirkenden Teile durch die gleichen Bezugszeichen gekennzeichnet.

Die Stirnseiten 6 der zu verbindenden Leiterenden 5 sind bündig zueinander vorgesehen. Die Einzelquerschnitte der Leiterenden 5 haben jeweils eine Höhe h und eine Breite b. Die miteinander zu verbindenden Leiterenden 5 bilden jeweils einen gemeinsamen viereckigen, insbesondere rechteckförmigen Leiterquerschnitt 9, der eine Höhe H und eine Breite B aufweist, wobei die Höhe H der Höhe h der Einzelquerschnitte der Leiterenden 5 entspricht und sich die Breite B des gemeinsamen Leiterquerschnitts 9 aus der Summe der Breiten b der Einzelquerschnitte der Leiterenden 5 ergibt. Mit dem gemeinsamen Leiterquerschnitt 9 ist also der Querschnitt gemeint, der sich durch das nebeneinander Anordnen der viereckigen, insbesondere rechteckförmigen Einzelquerschnitte der Leiterenden 5 ergibt. Die Einzelquerschnitte haben beispielsweise abgerundete Kanten. Das Verhältnis der Breite B zur Höhe H des gemeinsamen Leiterquerschnitts 9 ist größer als zwei. Das Verhältnis von der Breite b zur Höhe h jedes Einzelquerschnitts der Leiterenden 5 ist größer gleich eins. Die miteinander zu verbindenden Leiterenden 5 haben einen gemeinsamen Umfang, der durch zwei gegenüberliegende breite Umfangsseiten U1 und zwei gegenüberliegende schmale Umfangsseiten U2 gebildet ist.

Nach dem Ausführungsbeispiel in Fig.2 werden zwei Leiterenden 5 mittels der Schweißverbindung 8 verbunden. Die Schweißverbindung 8 ist jeweils in Richtung der Breite B gesehen zwischen zwei nicht aufgeschmolzenen Randabschnitten 10 der äußersten Leiterenden 5 vorgesehen. Die Schweißverbindung 8 wird also derart ausgeführt, dass in Richtung der Breite B gesehen an den beiden gegenüberliegenden Ränder des gemeinsamen Leiterquerschnitts 9 die Randabschnitte 10 unaufgeschmolzen bleiben. Somit verläuft die Schweißnaht 8 mit ihrer Längserstreckung L1 nicht über die gesamte Breite B des gemeinsamen Leiterquerschnitts 9.

Erfindungsgemäß ist vorgesehen, dass die Erstreckung L2 der Schweißverbindung 8 quer, beispielsweise senkrecht, zur Längserstreckung L1 in Richtung der Höhe H zumindest abschnittsweise größer ist als die Höhe H des gemeinsamen Leiterquerschnitts 9 und die Oberfläche der Schweißverbindung 8 in Bezug auf die Stirnseiten 6 der Randabschnitte 10 infolgedessen eingesunken ist. Der Bezugspunkt für das Einsinken der Schweißverbindung kann auch die gesamte Stirnseite 6 der Leiterenden 5 vor dem Verschweißen sein.

Durch die erfindungsgemäße Ausführung steht die Schweißverbindung 8 mit ihrer Erstreckung L2 an beiden breiten Umfangsseiten U1 gegenüber den Randabschnitten 10 der äußersten Leiterenden 5 vor. Desweiteren steht die Schweißverbindung 8 beidseitig gegenüber den Umfangsseiten U1 im Bereich unmittelbar unterhalb der Schweißverbindung 8 vor.

Die Oberfläche der Schweißverbindung 8 ist über die gesamte Erstreckung L1 der Schweißverbindung 8 um eine bestimmte Tiefe T eingesunken, so dass eine Vertiefung 12 gebildet ist. Der Werkstoff aus der Vertiefung 12 ist in die beiden seitlich vorstehenden Abschnitte 8.1 der Schweißverbindung 8 gelaufen. Die Schweißverbindung 8 hat in Richtung der Längserstreckung L1 der Schweißverbindung 8 gesehen einen ovalförmigen Querschnitt.

Die Schweißverbindung 8 ist in Richtung auf die Stirnseiten der betreffenden Leiterenden gesehen ovalförmig oder kreisförmig ausgeführt.

Die Herstellung der erfindungsgemäßen Schweißverbindung 8 erfolgt nach folgenden Verfahrensschritten: Zunächst werden die zu verbindenden Leiterenden abisoliert und nebeneinander angeordnet. Anschließend wird der Werkstoff an den Stirnseiten 6 der Leiterenden 5 durch pendelndes Hin- und Herbewegen eines Laserstrahls lokal aufgeschmolzen, wobei der Verschwenkbereich des Lasers derart eingestellt ist, dass das sich bildende Schweißbad zwischen einem nicht aufgeschmolzenen Randabschnitt 10 eines der beiden äußersten Leiterelemente 4 und einem nicht aufgeschmolzenen Randabschnitt 10 des anderen äußersten Leiterelementes 4 gehalten ist. Die Schweißparameter, insbesondere die Leistung des Lasers, eine Strahldicke des Lasers und eine Schweißzeit, werden derart eingestellt, dass die Erstreckung der Schweißverbindung in Richtung der Höhe H zumindest abschnittsweise größer ist als die Höhe H des gemeinsamen Leiterquerschnitts 9.

Die miteinander verschweißten Leiterenden 5, insbesondere die Randabschnitte 10 der Leiterenden 5, können an ihren Kanten jeweils abgerundet ausgebildet sein, um durch das Vermeiden von Graten und Spitzen eine verringerte Feldlinienkonzentration und damit eine höhere Isolations- bzw. Durchschlagsfestigkeit zu erreichen. An den abgerundeten, miteinander verschweißten Leiterenden 5 kann nach dem Verschweißen eine nicht dargestellte, elektrisch isolierende Isolationsbeschichtung aufgebracht werden. Durch die Abrundung der miteinander verschweißten Leiterenden 5 weist die Isolationsbeschichtung an den verschweißten Leiterenden 5 eine gleichmäßigere Schichtdicke auf als bei nicht abgerundeten Leiterenden 5. Ohne die Abrundung der Leiterenden 5 würde die Isolationsbeschichtung an den Kanten, Graten oder Spitzen der Leiterenden 5 eine geringere Schichtdicke aufweisen, so dass dort die Isolations- bzw. Durchschlagsfestigkeit verringert wäre. Die Abrundung der Leiterenden 5 kann bereits vor dem Verschweißen der Leiterenden 5 beispielsweise durch mechanische Bearbeitung oder beim Schweißprozess durch Aufschmelzen der Kanten oder nach dem Verschweißen durch mechanische Bearbeitung hergestellt werden.

Fig.3 zeigt eine Draufsicht auf die Stirnseite der Leiterenden mit der Schweißverbindung nach Fig.2. Bei der Ansicht nach Fig.3 sind die gegenüber der Ansicht nach Fig.1 und Fig.2 gleichbleibenden oder gleichwirkenden Teile durch die gleichen Bezugszeichen gekennzeichnet.

## Patentansprüche

1. Verfahren zum Herstellen einer Schweißverbindung (8) eines Stators einer elektrischen Maschine mit Statornuten (3) und in den Statornuten (3) angeordneten Leiterelementen (4), die jeweils zwei Leiterenden (5) haben, wobei mehrere nebeneinander liegende Leiterenden (5) verschiedener Leiterelemente (4) jeweils mittels einer an den Stirnseiten (6) der betreffenden Leiterenden (5) vorgesehenen Schweißverbindung (8) ohne Zusatzwerkstoff miteinander verbunden sind, wobei die miteinander verbundenen Leiterenden (5) jeweils einen gemeinsamen viereckigen Leiterquerschnitt (9) bilden, der eine Höhe (H) und eine Breite (B) aufweist, wobei die Höhe (H) der Höhe (h) eines Einzelquerschnitts der Leiterenden (5) entspricht und sich die Breite (B) des gemeinsamen Leiterquerschnitts (9) aus der Summe der Breiten (b) der Einzelquerschnitte der Leiterenden (5) ergibt, das Verfahren umfassend die Schritte:
- Nebeneinander Anordnen der Leiterenden (5),
- Lokales Aufschmelzen des Werkstoffes an den Stirnseiten (6) der Leiterenden(5) durch pendelndes Hin- und Herbewegen eines Laserstrahls, wobei der Verschwenkbereich des Lasers derart eingestellt ist, dass das sich bildende Schweißbad zwischen einem nicht aufgeschmolzenen Randbereich (10) eines der beiden äußersten Leiterelemente (4) und einem nicht aufgeschmolzenen Randbereich (10) des anderen äußersten Leiterelementes (4) gehalten ist, **gekennzeichnet durch** die Schritte:
- Abisolieren der zu verbindenden Leiterenden (5), und
- Einstellen der Schweißparameter, insbesondere der Leistung des Lasers, einer Strahldicke des Lasers und einer Schweißzeit, derart, dass die Erstreckung (L2) der Schweißverbindung (8) in Richtung der Höhe (H) zumindest abschnittsweise größer ist als die Höhe (H) des gemeinsamen Leiterquerschnitts (9) und die Oberfläche der Schweißverbindung (8) in Bezug auf die Stirnseiten (6) der Randabschnitte (10) infolgedessen eingesunken ist.

2. Verfahren nach Anspruch 1, zusätzlich umfassend den Schritt Aufbringen einer Isolationsbeschichtung auf die miteinander verschweißten Leiterenden.

3. Verfahren nach einem der vorhergehenden Ansprüche, **dadurch gekennzeichnet, dass** die Schweißverbindung (8) in Richtung der Höhe (H) gesehen gegenüber den Randabschnitten (10) der äußersten Leiterenden (5) vorsteht, insbesondere beidseitig vorsteht.

4. Verfahren nach einem der vorhergehenden Ansprüche, **dadurch gekennzeichnet, dass** die Oberfläche der Schweißverbindung (8) über die gesamte Längserstreckung (L1) der Schweißverbindung (8) eingesunken ist.

5. Verfahren nach einem der vorhergehenden Ansprüche, **dadurch gekennzeichnet, dass** die Schweißverbindung (8) bei einer Draufsicht auf die Stirnseiten (6) der betreffenden Leiterenden (5) ovalförmig ausgebildet ist.

6. Verfahren nach einem der vorhergehenden Ansprüche, **dadurch gekennzeichnet, dass** die Schweißverbindung (8) in Richtung der Längserstreckung (L1) der Schweißverbindung (8) gesehen einen ovalförmigen Querschnitt hat.

7. Verfahren nach einem der vorhergehenden Ansprüche, **dadurch gekennzeichnet, dass** das Verhältnis der Breite (B) zur Höhe (H) des gemeinsamen Leiterquerschnitts (9) größer als zwei ist.

8. Verfahren nach einem der vorhergehenden Ansprüche, **dadurch gekennzeichnet, dass** der Einzelquerschnitt der Leiterenden (5) jeweils eine Höhe (h) und eine Breite (b) aufweist, wobei das Verhältnis von der Breite (b) zur Höhe (h) des Einzelquerschnitts der Leiterenden (5) jeweils größer gleich eins ist.

9. Verfahren nach einem der vorhergehenden Ansprüche, **dadurch gekennzeichnet, dass** der Einzelquerschnitt der Leiterenden (5) jeweils quadratisch oder rechteckförmig, insbesondere mit abgerundeten Kanten, ausgebildet ist.

10. Verfahren nach einem der vorhergehenden Ansprüche, **dadurch gekennzeichnet, dass** die miteinander verbundenen Leiterenden (5), insbesondere die Randabschnitte (10), abgerundet ausgebildet sind.

## Claims

1. Method for producing a weld connection (8) of a stator of an electric machine having stator slots (3) and conductor elements (4) that are arranged in the stator slots (3) and that each comprise two conductor ends (5), wherein multiple adjacent-lying conductor ends (5) of different conductor elements (4) are mutually connected without the use of an additional material by means of a weld connection (8) that is provided at the end faces (6) of the relevant conductor ends (5), wherein the mutually connected conductor ends (5) each form a common four-cornered conductor cross section (9) that has a height (H) and a width (B), wherein the height (H) corresponds to the height (h) of an individual cross section of the conductor ends (5) and the width (B) of the common conductor cross section (9) is formed from the sum of the widths (b) of the individual cross sections of the conductor ends (5), the method comprising the following steps:
- arranging the conductor ends (5) adjacent to one another,
- locally melting the material at the end faces (6) of the conductor ends (5) by means of moving a laser beam to and fro in a pendulum manner, wherein the pivot range of the laser is adjusted in such a manner that the weld pool that is formed is retained between a non-melted boundary section (10) of one of the two outermost conductor elements (4) and a non-melted boundary section (10) of the other outermost conductor element (4), **characterized by** the following steps:
- stripping insulation from the conductor ends (5) that are to be connected, and
- adjusting the weld parameters, in particular the power of the laser, a beam thickness of the laser and a weld time in such a manner that the extension (L2) of the weld connection (8) in the direction of the height (H) is greater at least in sections than the height (H) of the common conductor cross section (9) and the surface of the weld connection (8) with regard to the end faces (6) of the boundary sections (10) is sunk in as a result.

2. Method according to Claim 1, additionally comprising the step of applying an insulation coating to the mutually welded conductor ends.

3. Method according to either one of the preceding claims, **characterized in that** the weld connection (8), when viewed in the direction of the height (H), protrudes beyond the boundary sections (10) of the outermost conductor ends (5), in particular on both sides.

4. Method according to any one of the preceding claims, **characterized in that** the surface of the weld connection (8) is sunken in over the entire longitudinal extension (L1) of the weld connection (8).

5. Method according to any one of the preceding claims, **characterized in that** the weld connection (8) in the case of a plan view of the end faces (6) of the relevant conductor ends (5) is configured in an oval shape.

6. Method according to any one of the preceding claims, **characterized in that**, when viewed in the direction of the longitudinal extension (L1) of the weld connection (8), the weld connection (8) has an oval cross section.

7. Method according to any one of the preceding claims, **characterized in that** the ratio of the width (B) with respect to the height (H) of the common conductor cross section (9) is greater than two.

8. Method according to any one of the preceding claims, **characterized in that** the individual cross section of the conductor ends (5) has in each case a height (h) and a width (b), wherein the ratio of the width (b) with respect to the height (h) of the individual cross section of the conductor ends (5) is in each case greater than or equal to one.

9. Method according to any one of the preceding claims, **characterized in that** the individual cross section of the conductor ends (5) is configured in each case in a square-shaped or rectangular manner, in particular with rounded edges.

10. Method according to any one of the preceding claims, **characterized in that** the mutually connected conductor ends (5), in particular the boundary sections (10), are configured in a rounded manner.

## Revendications

1. Procédé de fabrication d'une connexion par soudage (8) d'un stator d'une machine électrique avec des rainures de stator (3) et des éléments conducteurs (4) disposés dans les rainures de stator (3), qui ont chacun deux extrémités de conducteur (5), plusieurs extrémités de conducteur (5) juxtaposées de différents éléments conducteurs (4) étant respectivement reliées les unes aux autres au moyen d'une connexion par soudage (8) prévue sur les côtés frontaux (6) des extrémités de conducteur (5) concernées, sans matériau supplémentaire, les extrémités de conducteur (5) reliées les unes aux autres formant respectivement une section transversale de conducteur rectangulaire commune (9) qui présente une hauteur (H) et une largeur (B), la hauteur (H) correspondant à la hauteur (h) d'une section transversale unitaire des extrémités de conducteur (5) et la largeur (B) de la section transversale de conducteur commune (9) résultant de la somme des largeurs (b) des sections transversales unitaires des extrémités de conducteur (5), le procédé comprenant les étapes consistant à :
- juxtaposer les extrémités de conducteur (5),
- faire fondre localement le matériau sur les côtés frontaux (6) des extrémités de conducteur (5) par un mouvement de va-et-vient oscillant d'un faisceau laser, la plage de pivotement du laser étant ajustée de telle sorte que le bain de soudure qui se forme soit maintenu entre une zone de bord non fondue (10) de l'un des deux éléments conducteurs (4) les plus extérieurs et une zone de bord non fondue (10) de l'autre élément conducteur (4) le plus extérieur, **caractérisé par** les étapes consistant à :
- dénuder les extrémités de conducteur (5) à relier, et
- régler les paramètres de soudage, notamment la puissance du laser, l'épaisseur d'un faisceau du laser et une durée de soudage, de telle sorte que l'extension (L2) de la connexion par soudage (8) dans la direction de la hauteur (H) soit au moins par portions supérieure à la hauteur (H) de la section transversale de conducteur commune (9) et que la surface de la connexion par soudage (8), par rapport aux côtés frontaux (6) des portions de bord (10), soit par conséquent enfoncée.

2. Procédé selon la revendication 1, comprenant en outre l'étape consistant à appliquer un revêtement isolant sur les extrémités de conducteur soudées les unes aux autres.

3. Procédé selon l'une quelconque des revendications précédentes, **caractérisé en ce que** la connexion par soudage (8), vue dans la direction de la hauteur (H), fait saillie par rapport aux portions de bord (10) des extrémités de conducteur (5) les plus extérieures, notamment fait saillie des deux côtés.

4. Procédé selon l'une quelconque des revendications précédentes, **caractérisé en ce que** la surface de la connexion par soudage (8) est enfoncée sur toute la longueur (L1) de la connexion par soudage (8).

5. Procédé selon l'une quelconque des revendications précédentes, **caractérisé en ce que** la connexion par soudage (8), en vue de dessus sur les côtés frontaux (6) des extrémités de conducteur (5) concernées, est réalisée sous forme ovale.

6. Procédé selon l'une quelconque des revendications précédentes, **caractérisé en ce que** la connexion par soudage (8), vue dans la direction de la longueur (L1) de la connexion par soudage (8), présente une section transversale ovale.

7. Procédé selon l'une quelconque des revendications précédentes, **caractérisé en ce que** le rapport de la largeur (B) à la hauteur (H) de la section transversale de conducteur commune (9) est supérieur à deux.

8. Procédé selon l'une quelconque des revendications précédentes, **caractérisé en ce que** la section transversale unitaire des extrémités de conducteur (5) présente respectivement une hauteur (h) et une largeur (b), le rapport de la largeur (b) à la hauteur (h) de la section transversale unitaire des extrémités de conducteur (5) étant respectivement supérieur ou égal à un.

9. Procédé selon l'une quelconque des revendications précédentes, **caractérisé en ce que** la section transversale unitaire des extrémités de conducteur (5) est respectivement réalisée sous forme carrée ou rectangulaire, notamment avec des bords arrondis.

10. Procédé selon l'une quelconque des revendications précédentes, **caractérisé en ce que** les extrémités de conducteur (5) reliées les unes aux autres, notamment les portions de bord (10), sont réalisées de manière arrondie.
